## Europäisches Patentamt
## European Patent Office
## Office européen des brevets

(19)

(11) Veröffentlichungsnummer: **0 000 058**

**A1**

(12)

# EUROPÄISCHE PATENTANMELDUNG

(21) Anmeldenummer: **78100100.3**

(22) Anmeldetag: **06.06.78**

(51) Int. Cl.²: **B 29 D 27/04**

(30) Priorität: **10.06.77 DE 2726084**

(43) Veröffentlichungstag der Anmeldung:
**20.12.78 Patentblatt 78/1**

(84) Benannte Vertragsstaaten:
**BE DE FR GB NL**

(71) Anmelder: **Bayer Aktiengesellschaft,
Zentralbereich Patente, Marken und Lizenzen Bayerwerk,
D-5090 Leverkusen 1 (DE)**

(72) Erfinder: **Gonzalez-Dörner, Alberto Carlos, Dr.,
Körner Strasse 4,
D-5090 Leverkusen 1 (DE)**

(72) Erfinder: **Rabe, Hansjürgen, Dr.,
Domblick 20,
D-5090 Leverkusen 31 (DE)**

(72) Erfinder: **Hauptmann, Günter, Dr.,
Carl-Leverkus-Strasse 2,
D-5068 Odenthal (DE)**

(72) Erfinder: **Kraft, Karl Josef, Dr.,
Heymannstrasse 38,
D-5090 Leverkusen 1 (DE)**

(72) Erfinder: **Roegler, Manfred, Dr.,
Weberstrasse 98,
D-5300 Bonn (DE)**

(54) **Verfahren und Vorrichtung zum kontinuierlichen Herstellen von Schaumstoffblöcken mit Rechteckquerschnitt.**

(57) Schaumstoffblöcke (50), deren Höhe etwa ihrer Breite entspricht, werden dadurch hergestellt, dass das Reaktionsgemisch in einen Zwischenlagerungstrog (33) anreagieren gelassen wird, dann der Aufschäumzone (39) aufgegeben und zwischen 0° und 60° absärts geneigt geführt wird, und dass entlang der Aufschäumzone (39) die Oberfläche egalisiert wird.

FIG. 2

EP 0 000 058 A1

BAYER AKTIENGESELLSCHAFT      5090 Leverkusen, Bayerwerk
Zentralbereich      Mr/RBg
Patente, Marken und Lizenzen

Verfahren und Vorrichtung zum kontinuierlichen Herstellen
von Schaumstoffblöcken mit Rechteckquerschnitt

Die Erfindung richtet sich auf ein Verfahren und eine Vorrichtung zum kontinuierlichen Herstellen von Schaumstoffblöcken mit Rechteckquerschnitt aus einem schäumfähigen Reaktionsgemisch, insbesondere auf Basis Polyurethan, wobei das Reaktionsgemisch einem fortlaufenden Trog, in dem das Reaktionsgemisch zum Block aufschäumt, aufgegeben wird.

Blockschaumstoff wird in der Regel auf entsprechende Größe zu Polstermaterial, Isoliermaterial, Folienmaterial usw. zerschnitten.

Zweck des Herstellens von endlosen Schaumstoffblöcken mit Reckteckquerschnitt ist der geringere Verschnitt.

Es sind mehrere Verfahren und Vorrichtungen entwickelt worden, mit denen sich Rechteckblöcke kontinuierlich fertigen lassen.

Nach der DT-OS 2 142 450 (entspricht US-PS 3 786 122) ist eine Blockschäumanlage bekannt, bei der das reaktionsfähige Gemisch am Boden eines Troges eingegeben wird, der am Ein-

Le A 18 122 -Ausland

laufende eines Förderers angeordnet ist. Das Gemisch reagiert bereits im Trog bis zu einem Zustand, in dem es gerade noch fließfähig ist, und gelangt über ein Wehr auf eine schiefe Ebene, die in der Aufschäumzone angeordnet ist und über die eine Bodenfolie geführt ist. Diese schiefe Ebene ist derart geneigt, daß die Oberfläche des entstehenden Schaumstoffblockes horizontal verläuft bzw. parallel zur Neigung des eigentlichen, hinter der schiefen Ebene anschließenden Förderbandes, das etwa zwischen 3 und 10° geneigt ist, ausgerichtet ist. Es entsteht zwar ein Block mit Rechteckquerschnitt; er weist jedoch auf der Oberfläche eine lederartige Haut auf. Außerdem ist die Blockhöhe nicht viel größer als etwa die Hälfte der Blockbreite.

Andererseits ist eine Blockschäumanlage aus der DT-OS 2 123 216 (entspricht US-PS 3 924 925) bekannt, bei der entlang der Aufschäumzone die Oberfläche des entstehenden Blockes mit einer Deckfolie abgedeckt und mittels einer Egalisiervorrichtung quer zur Förderrichtung egalisiert wird. Damit ist zwar die Bildung der lederartigen Haut vermieden; als Blockhöhe wird jedoch ebenfalls nur eine Höhe erreicht, die geringfügig über der halben Blockbreite liegt. Als nachteilig hat sich erwiesen, daß die Bodenzone des Schaumstoffblockes höhere Verdichtung aufweist, so daß bei der Weiterverarbeitung des Schaumstoffes auf diesen Mangel besondere Rücksicht zu nehmen ist.

Aufgabe der Erfindung ist ein Verfahren und eine Vorrichtung, womit man endlose Schaumstoffblöcke herstellen kann, deren Höhe wesentlich größer ist als die halbe Blockbreite und die homogenen Querschnitt aufweisen sowie auch in der Bodenzone und in der Deckzone weitgehend die gleiche Dichte zeigen wie der Kern.

Aus verfahrenstechnischer Sicht wird diese Aufgabe gemäß der Erfindung durch die Kombination folgender Schritte gelöst:

Le A 18 122 -Ausland

a) Das Reaktionsgemisch wird vor dem Auftragen anreagieren gelassen;

b) das aufgetragene Reaktionsgemisch wird in der Aufschäumzone unter einer Neigung zwischen 0 und 60°, bevorzugt zwischen 0 und 30°, nach unten geführt;

c) entlang der Aufschäumzone wird die Oberfläche des aufsteigenden Schaumstoffs quer zur Förderrichtung egalisiert.

Wie eingangs zum Stand der Technik nachgewiesen, sind die einzelnen Verfahrensschritte an sich bekannt. Für den Fachmann lag es jedoch nicht ohne weiteres auf der Hand, daß durch die Kombination dieser an sich bekannten Maßnahmen die gemäß der Erfindung angestrebte Wirkung eintreten mußte; denn zum Erzeugen von Blöcken, deren Höhe und Breite beispielsweise etwa die gleiche Größe besitzen, muß entweder bei Beibehaltung der bisher üblichen Bandgeschwindigkeiten etwa die doppelte Gemischmenge aufgetragen werden oder man reduziert die Bandgeschwindigkeit beim erfindungsgemäßen Verfahren auf die Hälfte. In beiden Fällen entsteht mit der erfindungsgemäßen Arbeitsweise im Vergleich mit den bisher bekannten Verfahren ein Gemischauftrag doppelter Stärke. Daraus mußte der Fachmann folgern, daß gerade wegen der größeren Aufschäumhöhe auf der Bodenzone eine größere Last ruht, die eigentlich eine noch höhere Dichte der Bodenzone verursachen mußte. Auch mußte davon ausgegangen werden, daß trotz der an sich bekannten Maßnahmen zum Vermeiden der Oberflächenwölbung wegen der größeren Blockhöhe eine solche Wölbung trotz Anwendung der erfindungsgemäßen Lehre auftreten mußte. Entgegen dem vorbekannten Verfahren, bei dem das Reaktionsgemisch vor dem Auftragen anreagieren gelassen wird und die Blockoberfläche eben gehalten wird, indem das aufgetragene Reaktionsgemisch in der Aufschäumzone auf der Förderfläche bzw. der darauf geförderten Deckfolie abwärts gefördert wird, schäumt beim erfindungsgemäßen Verfahren das Reaktions-

Le A 18 122

- 4 -                    0000058

gemisch über jenes Niveau weiter nach oben auf, so daß im Idealfall der Neigungswinkel der Förderfläche und der Anstiegswinkel der Schaumstoffoberfläche in der Aufschäumzone gleich groß sind.

Die Erzeugung höherer Blöcke bringt geringeren Produktionsaufwand und weniger Verlust mit sich. Bei den bisher bekannten Verfahren war es notwendig, von der Boden- und der Deckzone jeweils etwa eine 2 cm dicke Schicht abzuschneiden, sofern das Blockmaterial für hohe Ansprüche verwendet werden sollte. Das erfindungsgemäße Verfahren erlaubt es, die Dicke der wegzuschneidenden Schichten geringer zu halten, d. h. etwa auf 1 cm zu reduzieren. Wird nun ein Block gefertigt, dessen Höhe der Breite entspricht, so spart man gegenüber den bisherigen Fertigungsverfahren, bei denen die Höhe etwa der halben Breite entsprach,6 cm Schaumstoffdicke ein. 4 cm Schichtdicke werden eingespart, weil man nur einen Block fertigt, dessen Querschnittsfläche der Summe zweier Querschnittsflächen von nach den vorbekannten Verfahren gefertigten Blöcken entspricht. Die weiteren 2 cm eingesparte Schichtdicke ergeben sich aus der besseren Querschnittshomogenität in der Deck- und Bodenzone.

Das erfindungsgemäße Verfahren ist geeignet für die Herstellung von endlosen Schaumstoffblöcken aus Polyurethan, Polycarbodiimid, Polyisocyanurat oder Kombinationen aus diesen Kunststoffen. Als Deck- oder Boden- und Seitenfolien finden Papierbahnen aus normalem oder kunststoffbeschichtetem Kraftpapier Anwendung. Auch Vliesstoffe, Textilbahnen sowie Kunststoffolien und Schaumstoffolien, Metallfolien sowie Kombinationen dieser Materialien finden ebenfalls Anwendung. Die edleren Materialien verwendet man nur, sofern man die Deck- und/oder Bodenschicht des Schaumstoffblockes als mit der Deckschicht kaschiertes Produkt einem besonderen Verwendungszweck zuführen will.

Le A 18 122

Zur Durchführung des Verfahrens geht die Erfindung von einer Vorrichtung aus, bestehend aus einer Gemischaufgabevorrichtung und einem Förderer mit Seitenbegrenzungen sowie Abwickelstationen für Boden-, Seiten- und Deckfolien.

Das Neue dabei ist die Kombination folgender Merkmale:

a) Die Aufgabevorrichtung ist mit einem Zwischenlagerungstrog ausgestattet;

b) in der Aufschäumzone ist die Förderfläche in einer Neigung von 0 bis 60°, vorzugsweise 0 bis 30°, einstellbar;

c) in der Aufschäumzone ist eine Egalisiervorrichtung angeordnet.

Dabei kann der Zwischenlagerungstrog, wie bereits zum Stand der Technik beschrieben, vor dem Einlaufende eines Förderers angeordnet sein. Der Zwischenlagerungstrog kann aber auch auf dem Einlaufende eines Förderers vorgesehen sein.

In der Aufschäumzone ist die Förderfläche nach unten geneigt. Die Neigung kann über die Länge der Förderfläche unterschiedlich sein, um sie dem zeitlichen Aufschäumgrad anzupassen. Die Förderfläche kann beispielsweise als stationäre, gegebenenfalls mehrteilige Platte ausgebildet sein oder auch als separates Förderband, an das sich das eigentliche Förderband anschließt. Es kann aber auch nur ein einziges Förderband vorgesehen sein, dessen erster Teil entsprechend geneigt geführt ist.

Als Egalisiervorrichtung wird vorzugsweise ein Lattenrost verwendet, der besonders leicht gebaut ist. Es können aber auch Druckplatten vorgesehen sein, die senkrecht zur Förderrichtung elastisch aufgehängt sind. Quer zur Förderrichtung angeordnete und mit Gegengewichten versehene Kufen sind ebenfalls bekannt. Auch ein umlaufendes Band, dessen Untertrum lose auf die Oberfläche des im Aufschäumen begriffenen Ge-

Le A 18 122

misches herabhängt, fand schon Anwendung. Ein solches Band kann aus einem gummierten Gewebeband bestehen, aber auch nach Art eines endlosen umlaufenden Lattenrostes aufgebaut sein.

Aufgabevorrichtung und Egalisiervorrichtung sind in an sich bekannter Weise vorzugsweise breiteneinstellbar ausgebildet.

In einer Zeichnung ist die erfindungsgemäße Vorrichtung in zwei Ausführungsbeispielen rein schematisch dargestellt und nachstehend näher erläutert. Es zeigen:

Fig. 1    die Vorrichtung gemäß einem ersten Ausführungsbeispiel in der Seitenansicht und

Fig. 2    die Vorrichtung gemäß einem zweiten Ausführungsbeispiel in der Seitenansicht.

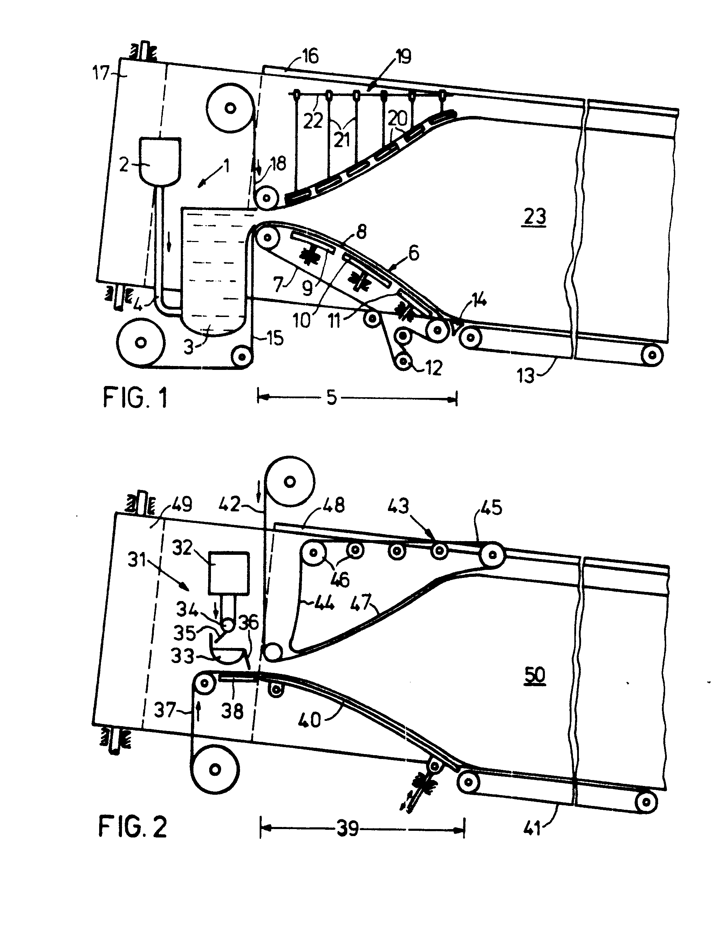

In Fig. 1 besteht die Aufgabevorrichtung 1 aus einem Mischkopf 2 und einem Trog 3, in dessen unteren Bereich die vom Mischkopf 2 wegführende Zuleitung 4 einmündet. In der Aufschäumzone 5 ist eine geneigte Förderfläche 6 angeordnet. Sie besteht aus einem umlaufenden Band 7, dessen Obertrum 8 mit verstellbaren Platten 9, 10, 11 hinterlegt ist, so daß, über die Länge gesehen, die Förderfläche 6 verschiedene Neigungswinkel aufweist. Eine Spannvorrichtung 12 sorgt für eine konstante Spannung des Bandes 7. An das Band 7 schließt das eigentliche Förderband 13 an. Ein Einsatzstück 14 überbrückt die Lücke zwischen den beiden Bändern 7, 13. Die Bänder 7, 13 sind von einer Bodenfolie 15 abgedeckt, auf die das im Trog 3 anreagierte Gemisch aufgegeben wird. Die Bänder 7, 13 sind durch Seitenbegrenzungen 16 (es ist nur die hintere dargestellt) begrenzt, die mit Seitenfolien 17 abgedeckt sind. Eine Deckfolie 18 wird auf das aufschäumende Gemisch am Anfang der Aufschäumzone 5 aufgelegt und unter einer Egalisiervorrichtung 19 hergeführt. Sie besteht aus einem Lattenrost 20, der mittels Gurten 21 an einem Rahmen 22 aufgehängt ist.

Le A 18 122

Die Höhe des Blockes 23 entspricht seiner Breite von 2 m.

In Fig. 2 besteht die Aufgabevorrichtung 31 aus einem Mischkopf 32 und einem Trog 33, dem von oben über ein Querverteillerrohr 34 und ein Leitblech 35 das Reaktionsgemisch zugeführt wird. Schließlich gelangt das Gemisch über ein Aufgabeblech 36 auf die Bodenfolie 37, die in diesem Bereich über einen Tisch 38 geführt ist. Anschließend gelangt die Bodenfolie 37 auf eine in der Aufschäumzone 39 angeordnete, als winkeleinstellbare Platte ausgebildete Förderfläche 40. Dahinter ist das eigentliche Förderband 41 angeordnet, das entsprechend höhenverstellbar ist, um es an die Winkeleinstellung der Förderfläche 40 anpassen zu können. Am Beginn der Aufschäumzone 39 wird eine Deckfolie 42 auf die Oberfläche des Reaktionsgemisches aufgelegt und unter einer Egalisiervorrichtung 43 hergeführt. Diese besteht aus einem endlosen umlaufenden Band 44, dessen Obertrum 45 über Rollen 46 geführt ist und dessen Untertrum 47 locker herabhängt und die Oberfläche des aufsteigenden Schaumstoffes egalisiert. Die Seitenbegrenzungen 48 (es ist nur die hintere dargestellt) sind durch Seitenfolien 49 abgedeckt. Der fertige Block 50 besitzt eine Breite von 2,10 m und eine Höhe von 1,80 m.

0000058

Patentansprüche

1. Verfahren zum kontinuierlichen Herstellen von Schaumstoffblöcken mit Rechteckquerschnitt aus einem schäumfähigen Reaktionsgemisch, insbesondere auf Basis Polyurethan, wobei das Reaktionsgemisch einem fortlaufenden Trog, in dem das Reaktionsgemisch zum Block aufschäumt, aufgegeben wird, gekennzeichnet durch die Kombination folgender Schritte:

a) Das Reaktionsgemisch wird vor dem Auftragen anreagieren gelassen;

b) das aufgetragene Reaktionsgemisch wird in der Aufschäumzone unter einer Neigung zwischen 0 und 60°, bevorzugt zwischen 0 und 30°, nach unten geführt;

c) entlang der Aufschäumzone wird die Oberfläche des aufsteigenden Schaumstoffs quer zur Förderrichtung egalisiert.

2. Vorrichtung zur Durchführung des Verfahrens, bestehend aus einer Gemischaufgabevorrichtung und einem Förderer mit Seitenbegrenzungen sowie Abwickelstationen für Boden-, Seiten- und Deckfolien, gekennzeichnet durch die Kombination folgender Merkmale:

a) Die Aufgabevorrichtung (1, 31) ist mit einem Zwischenlagerungstrog (3, 33) ausgestattet;

b) in der Aufschäumzone (5, 39) ist die Förderfläche (6, 40) in einer Neigung von 0 bis 60°, vorzugsweise 0 bis 30°, einstellbar;

c) in der Aufschäumzone (5, 39) ist eine Egalisiervorrichtung (19, 43) angeordnet.

Le A 18 122

FIG. 1

FIG. 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 3 553 300</u> (BUFF)<br>* Spalte 2, Zeilen 42-45, 51-55; Abbildungen 1-3 *<br><br>———— | 1,2 |

**KLASSIFIKATION DER ANMELDUNG (Int.Cl.²)**

B 29 D 27/04

**RECHERCHIERTE SACHGEBIETE (Int. Cl.²)**

B 29 D 27/04
B 29 D 27/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Anschlußdatum der Recherche | Prüfer |
|---|---|---|
| Den Haag | 04-09-1978 | SCHMIDL |